# EUROPEAN PATENT APPLICATION

(11) **EP 1 415 886 A2**
(43) Date of publication of application: **06.05.2004**
(21) Application number: 03256801.6
(22) Date of filing: 28.10.2003
(51) Int. Cl.: B62C 5/02

(54) **Harness securement apparatus**

(30) Priority: 01.11.2002 GB 0225594; 18.03.2003 GB 0306140
(71) Applicant: Stables, George Keith, Esh, Durham DH7 9RB (GB); Harland, Peter, Bradford, West Yorkshire BD8 OJP (GB)
(72) Inventor: Stables, Keith George, Esh Durham DH7 9RB (GB)
(74) Representative: Jackson, Nicholas Andrew

(57) **Abstract**

A harness bracket (10) comprises a first securement member (12) and a second securement member (14). The harness bracket (10) is arranged, in use, to be mounted to a carriage used in harness racing or trotting where the carriage is pulled along by a horse. A harness bracket (10) is mounted on to two shafts extending from the carriage (11) in order to secure a harness therebetween. The second securement member (14) is movable relative to the first securement member (12) in order for the securement means (i.e. a securement plane or the plane of the harness) to move towards an optimal plane for transferring the forces from the horse to the carriage (11) through the shafts (15). Accordingly, as the horse turns out of the line of the wheels (60) of the carriage, the second part (14) of the harness bracket (10) move and pivot to provide a securement plane at an angle to the plane of the wheels.

## Description

### Field of the Invention

The present invention relates to harness securement apparatus, a vehicle comprising harness securement apparatus and a method of securing a harness to a vehicle.

### Background to the Invention

Conventional harness securement apparatus comprise harness brackets in order to secure a harness to a carriage, and in particular, carriages used in trotting races or harness racing. The harness extends around the body of the horse and is connected to two shafts extending from a vehicle located behind the horse. The shafts each have a harness bracket extending from the lower surfaces thereof. The harness has a quick hitch clip which clips between the harness and the harness bracket. The quick hitch clip provides a mouth region which securely grips to retain a shaft of the harness bracket. As the horse goes around the corner, there is a tendency for the carriage to skid and be pulled around the corner since the horse is pulling in a different direction to the orientation or direction of the wheels of the carriage. This thereby require an extra effort by the horse and results in a loss of energy. In addition, this skidding movement may also cause the carriage to lean over.

Furthermore, as the horse moves around the corner the stress caused by the misalignment of the horse and the carriage causes the harness to move relative to the body of the horse and/or to transfer unnecessary forces to the horse. This may cause discomfort to the horse and may also cause injuries. In addition, to compensate for the horse pulling in a different direction to the direction of the wheels, the vehicle and in particular the shafts of the vehicle may bend and are stressed. These forces may cause the vehicle and/or shafts to fail or break.

Finally, in the event of an accident or crash, the arrangement of the quick hitch clip and harness bracket may be inaccessible or in an awkward position. This may result in the quick hitch clip being difficult or even impossible to remove from the harness bracket. In such situations a part of the harness may need to be cut in order to remove the horse from the carriage. This means that the harness or at least a strip of the harness cannot be used again or is expensive to repair.

It is an aim of the present invention to overcome at least one problem associated with the prior art whether referred to herein or otherwise.

### Summary of the Invention

According to a first aspect of the present invention there is provided harness securement apparatus for securing a vehicle to a harness, the harness securement apparatus being arranged, in use, to be secured to a vehicle, the harness securement apparatus comprising a first securement member which is arranged, in use, to be mounted to a part of a vehicle and a second securement member comprising securement means which enables a harness to be secured thereto, wherein the second securement member is movable relative to the first securement member.

Preferably a harness clip is arranged, in use, to be secured to the second securement member and more preferably a quick hitch clip is arranged, in use, to be secured to the second securement member.

Preferably the first securement member is not removable from the second securement member.

Preferably the second securement member is restrained for movement relative to the first securement member. Preferably the harness securement apparatus limits the relative movement between the first securement member and the second securement member.

Preferably the vehicle comprises a horse drawn vehicle for use in harness racing or trotting racing. The vehicle may comprise a sulky.

Preferably the harness securement apparatus comprises a harness bracket.

Preferably the harness bracket is arranged, in use, to be mounted to the underside of a shaft extending from the vehicle.

The second securement member may be secured to the first securement member to enable relative translational movement in a single plane. The second securement member may be secured to the first securement member to enable relative substantially free translational movement in a single plane.

The second securement member may be movable in one plane relative to the first securement member and preferably is movable in two planes relative to the first securement member and more preferably is movable in three planes relative to the first securement member.

Preferably the second securement member is pivotally secured to the first securement member. Preferably the second securement member is pivotally secured to the first securement member such that a force is required to move the second securement member relative to the first securement member. The force required may be greater than that created by gravity acting on the members.

The second securement member may be pivotally movable relative to the first securement member about one axis and preferably about two axes and more preferably about three axes.

Preferably the second securement member is secured to the first securement member through a ball joint.

Preferably the first securement member is permanently secured to the second member.

Preferably the first securement member comprises a retaining aperture. The retaining aperture may be provided on a retaining plate.

Preferably the second securement member comprises a retaining shaft which is arranged, in use, to extend through the retaining aperture.

Preferably the retaining aperture comprises a retaining housing located therein.

Preferably the retaining housing comprises a partially spherical inner surface. Preferably the inner surface comprises a low friction surface.

Preferably the harness securement apparatus comprises a retaining element having a retaining passageway defined therethrough. Preferably an inner surface of the retaining passageway substantially co-operates with an outer surface of a retaining shaft provided on the second securement member. The retaining passageway may prevent or inhibit relative rotational movement about at least one and preferably two axes between the retaining shaft and the retaining element. The retaining passageway may enable the retaining shaft to rotate relative to the retaining element about the longitudinal axis of the retaining shaft and/or the longitudinal axis of the retaining passageway.

Preferably the retaining passageway enables translational movement of the shaft through the passageway and preferably along the longitudinal axis of the retaining shaft and/or the longitudinal axis of the retaining passageway.

Preferably the retaining element is arranged to be retained within a retaining housing. Preferably the retaining element is rotatable in the retaining housing. The retaining element may be rotatable about one and preferably two axes in the retaining housing. The retaining element may be fixed to prevent rotation of the retaining element about one axis. The retaining element may be rotatable about all three axes within the housing.

Preferably the retaining housing comprises an inner co-operating surface which co-operates with an outer co-operating surface of the retaining element. Preferably the co-operating surface of the retaining housing comprises a low friction material or a friction reducing material and more preferably comprises PTFE.

Preferably the second securement member rotates about a first axis relative to the first securement member in order to reduce the angle between a harness and a securement surface (or a securement shaft) of the harness securement apparatus whilst a vehicle is moving around a corner. Preferably the first axis is a substantially vertical axis.

The second securement member may be adapted for translational movement relative to the first securement member whilst a vehicle is moving around a corner.

The second securement member may rotate about a first and a second axis relative to the first securement member in order to reduce the angle between a harness and a securement surface (or a securement shaft) of the harness securement apparatus whilst a vehicle is moving around a corner.

The second securement member may be arranged to rotate about a third axis relative to the first securement member as a horse rises or falls relative to a vehicle.

The second securement member may be arranged to move relative to the first securement member as a vehicle accelerates and/or decelerates.

Preferably the first securement member is arranged to be secured to a part of a horse drawn carriage. Preferably the first securement member is arranged to be secured to a shaft extending from a horse drawn carriage and more preferably a shaft extending from a sulky.

Preferably the securement apparatus is arranged, in use, to enable a harness to move relative to a carriage and/or a shaft extending from a carriage. Preferably the securement apparatus is arranged, in use, to enable a harness to be at an angle relative to a carriage and/or a shaft extending from a carriage. The angle may be changeable. Preferably the harness securement apparatus comprises a first harness securement apparatus and a second harness securement apparatus. Preferably the first harness securement apparatus and the second harness securement apparatus are arranged to retain a harness therebetween in a securement plane or harness plane.

The vehicle may have two wheels provided therein defining a wheel plane therebetween. The harness securement apparatus may enable a harness plane to rotate or move or pivot relative to a wheel plane.

The harness securement apparatus may comprise a first harness securement apparatus and a second harness securement apparatus. Preferably, the second securement member of the first harness securement apparatus inhibits or prevents translational movement relative to the first securement member of the first harness securement apparatus.

The first securement member may comprise a metal. The second securement may comprise a metal.

The harness securement apparatus may comprise mounting means. The mounting means may be arranged, in use, to mount the harness securement apparatus to a "bullet".

The bullet may comprise a conventional bullet having auxiliary harness bracket(s) provided thereon.

The bullet may comprise a bullet with only the harness securement apparatus in accordance with the present invention being mountable thereon.

The mounting means may enable the harness securement apparatus to be secured to a bullet at different locations and preferably at different locations along a longitudinal length of a bullet.

The harness securement apparatus may be securable along a longitudinal length of the bullet at any location.

The harness securement apparatus may be securable at predetermined locations along the bullet.

According to a second aspect of the present invention there is provided a vehicle comprising harness securement apparatus for securing a vehicle to a harness, the harness securement apparatus comprising a first securement member which is mounted to a part of the vehicle and a second securement member comprising securement means which enables a harness to be secured thereto, wherein the second securement member is movable relative to the first securement member.

The vehicle may comprise a horse drawn carriage and preferably a carriage for use in harness racing or trotting racing and more preferably comprises a sulky.

The harness securement apparatus is preferably secured to a shaft extending from the vehicle and more preferably to the underside of a shaft extending from the vehicle. Preferably the vehicle has two shafts extending therefrom. Preferably a harness securement apparatus is secured on each shaft. A first shaft may be arranged to locate adjacent to a first side of a harness and a second shaft may be arranged to locate adjacent to a second side of a harness.

The or each harness securement apparatus may be arranged, in use, to have a harness clip removably secured thereto

According to a third aspect of the present invention there is provided a method of securing a vehicle to a harness comprising providing harness securement apparatus on a part of the vehicle, and securing a harness to the harness securement apparatus, the harness securement apparatus comprising a first securement member and a second securement member wherein the second securement member is movable relative to the first securement member.

According to a fourth aspect of the present invention there is provided a wheeled vehicle comprising harness securement apparatus, the harness securement apparatus being arranged to secure a harness in a harness plane whilst wheels of the vehicle are arranged to be retained in a wheel plane wherein the harness plane is movable relative to the wheel plane.

Preferably the harness is secured around a horse.

Preferably the vehicle comprises two wheels.

### Brief Description of the Drawings

The present invention will now be described, by way of example only, with reference to the drawings that follow in which:
Figure 1 is a perspective view of a prior art harness bracket.
Figure 2 is a perspective view of a prior art harness bracket having a harness clip retained thereto.
Figure 3 is a perspective view of a preferred embodiment of a harness bracket.
Figure 4 is a perspective view of a preferred embodiment of a harness bracket having a harness clip retained thereto.
Figure 5 is a side view of a preferred embodiment of a vehicle.
Figure 6 is a side view of an embodiment of a vehicle shaft having a preferred embodiment of a harness bracket secured thereto.
Figure 7 is a schematic plan view of an embodiment of a vehicle.
Figure 8 is a front view of a preferred embodiment of a harness bracket.
Figure 9 is a side view of a preferred embodiment of a retaining member.
Figure 10 is a front view of a preferred embodiment of a retaining member.
Figure 11 is a front view of a preferred embodiment of a mounting plate.
Figure 12 is a side view of a preferred embodiment of a rear abutment plate.
Figure 13 is a side of a preferred embodiment of a front abutment plate.
Figure 14 is a side view of a further embodiment of a harness bracket mounted to a conventional bullet.
Figure 15 is a further embodiment of a harness bracket mounted to a bullet.
Figure 16 is a front view of a yet further embodiment of a pair of harness brackets.

### Description of the Preferred Embodiments

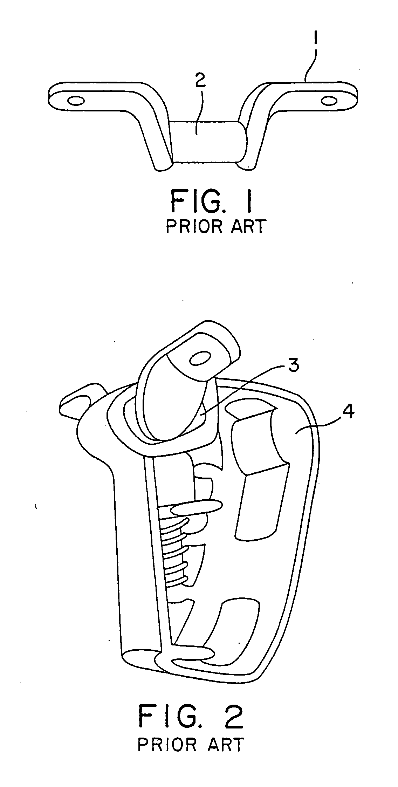

As shown in Figure 1 and Figure 2, a prior art harness bracket comprises a mounting plate 1 and a shaft 2. The shaft is arranged to project through an opening 3 provided in a harness clip 4. The harness bracket is mounted on each shaft projecting from a horse drawn vehicle, for example a sulky, and secures the vehicle to the harness. The harness bracket therefore enables the harness to be quickly, easily and securely secured to the vehicle. The harness bracket is essentially permanently mounted to the vehicle but may be replaced in a failure. The harness clip 4 is securely attached to the shaft 2 and prevents any relative movement between the harness bracket and the horse and in particular inhibits or prevents relative movement between harness and the shaft of the sulky. Accordingly, as the horse attempts to travel at an angle to the wheels of the carriage, the wheels are subjected to a force which is at an angle to the plane of the wheels. This may cause the wheels to skid or subject the horse or vehicle to stress forces.

As the horse moves relative to the carriage 11, there may be a tendency for the carriage to move towards the rear of the horse and also to potentially abut the hind legs of the horse. This may occur with a horse that could be described to be a "puller", i.e. one that pulls against the harness or pulls against the reins. This may also occur when the horse is decelerating or stopping. Accordingly, this poses an injury risk to the horse.

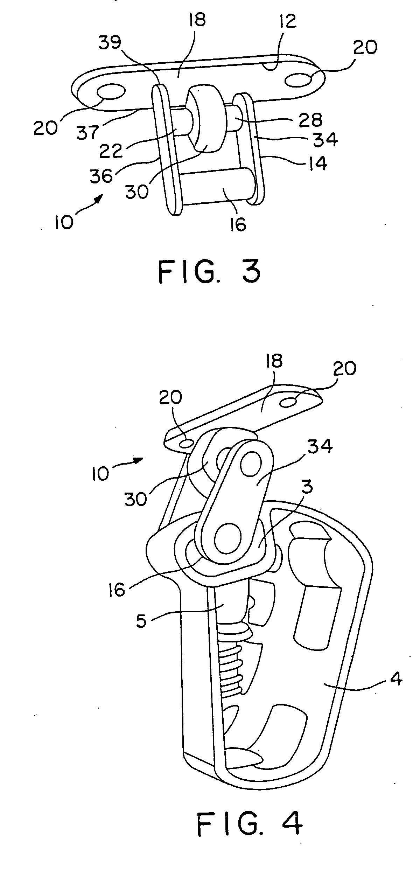

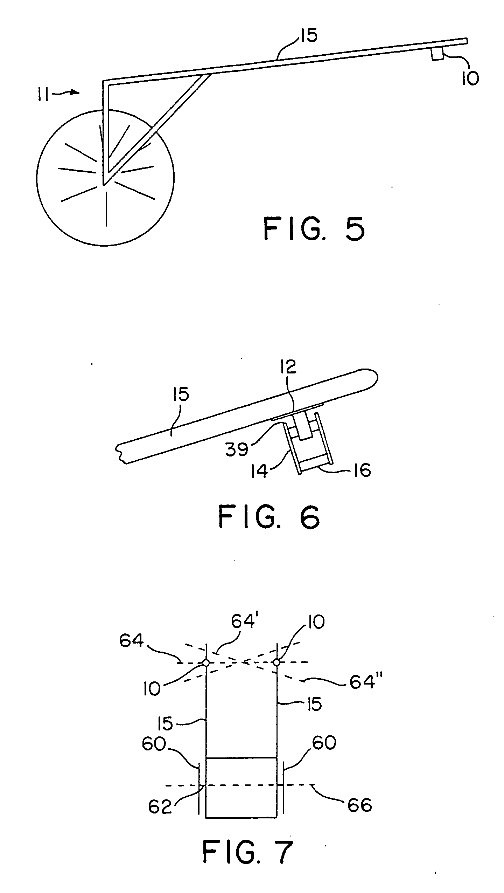

As shown in Figure 3 and Figure 4, a harness bracket 10 comprises a first securement member 12 and a second securement member 14. As further shown in Figure 5 and Figure 6, the first securement member 12 is arranged, in use, to be mounted to a carriage used in harness racing or trotting where the carriage is pulled along by a horse and more specifically is mounted to the underside of a shaft 15 extending from the carriage 11. The vehicle has two identical shafts 15 which are laterally spaced apart and are arranged to locate in each side of a horse. A harness bracket 10 is mounted to each shaft and therefore the carriage 11 is secure to each side of the harness of the horse. The two harness brackets define a theoretical securement plane therebetween.

An embodiment of a harness bracket 10 in accordance with the present invention comprises a first securement member 12 and a second securement member 14 as shown in Figure 3 and Figure 4. The first securement member 12 comprises mounting means in order to mount the harness bracket to the shaft 15 whereas the second securement member 14 comprises securement means to secure a harness clip to the harness bracket 10. The securement means comprises a securement shaft 16. The second securement member 14 is movable relative to the first securement member 12 in order for the securement means (i.e. a securement plane or the plane of the harness) to move towards an optimal plane for transferring the forces from the horse to the carriage 11 through the shafts 15. Accordingly, as the horse turns out of alignment with the wheels 60 of the carriage, the second part 14 of the harness brackets 10 move and pivot to provide a securement plane 64, 64', 64" at an angle to the plane 66 of the wheels 60. The plane 66 of the wheels 60 is taken through the axles 62 of the wheels 60, as shown in Figure 7 with the movement in the securement plane 64 shown in exaggerated positions.

As shown in Figure 4, the harness clip 4 comprises a quick hitch clip which has an opening 3 therein. The securement shaft 16 provided on the second securement member 14 is arranged to extend through the opening 3 in order to secure the quick hitch clip 4 to the harness bracket 10.

The quick hitch clip 4 is removable from the securement shaft 16. The quick hitch clip 4 has a pin 5 which is retractable against a spring to enable the shaft to locate in the opening 3. The pin 5 is then urged by the spring to move to at least partially block the entrance to the opening 3 in order to retain the shaft therein 16. The shaft 16 is arranged to be securely retained in the opening to prevent movement between the quick hitch clip 4 and the securement shaft as in conventional apparatus.

The second securement member 14 provides the securement shaft 16 for a conventional harness clip 4 to be secured thereto. The harness bracket 10 is arranged, in use, to be secured to a shaft 15 of a horse drawn vehicle and, in particular, to a carriage for use in harness or trotting racing such as a sulky.

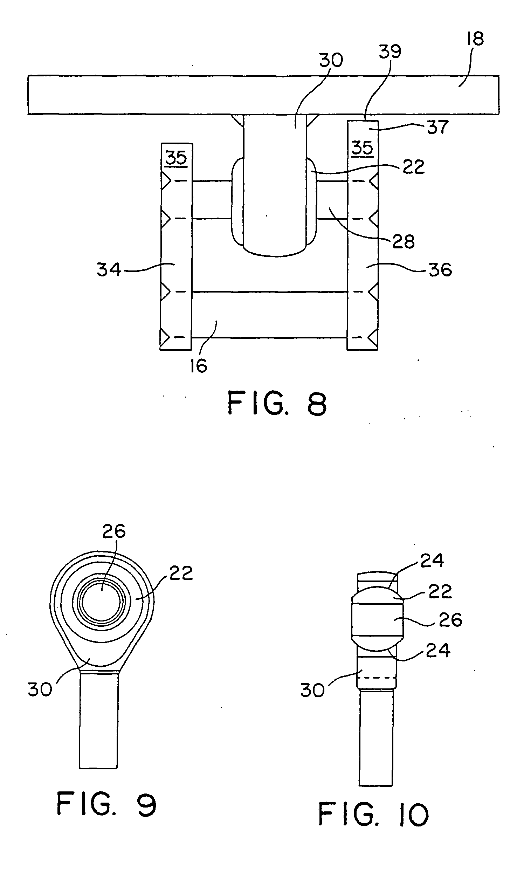

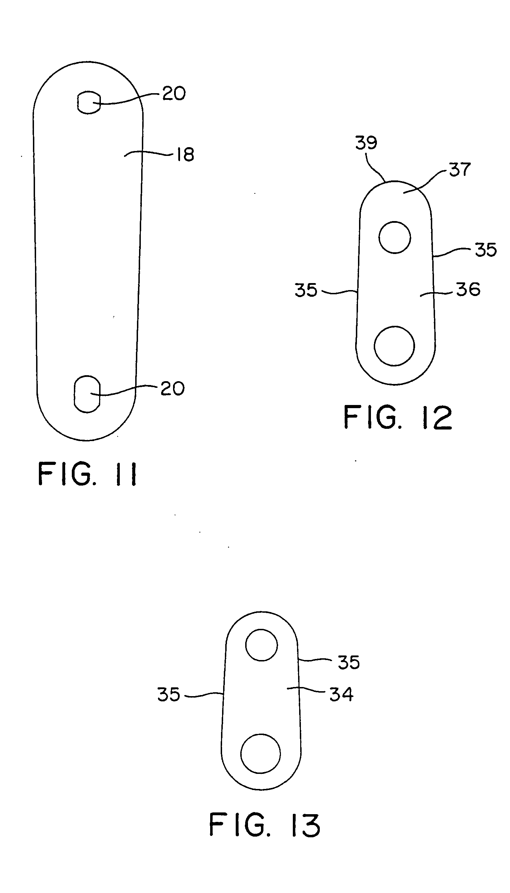

As shown in Figure 3, Figure 4, Figure 8 and Figure 11 the mounting means comprises a mounting plate 18 providing mounting apertures 20 in order for mounting elements to project therethrough in order to mount the harness bracket 10 to the underside of the shaft 15 extending from the carriage 11. For example, nut and bolts or possibly screws may be arranged to secure the harness bracket 10 to the shaft 15. A harness bracket is located on the underside of each shaft 15. The shafts 15 are arranged to locate on each side of a horse and are arranged to be connected to the harness extending around the body of the horse. Accordingly, the horse is thereby restrained to the carriage 11 and is arranged to pull the carriage.

The first securement member 12 is permanently retained to the second securement means 14 through retaining means. As shown in Figures 3, 4 and 8 to 10 the retaining means comprises a retaining member 22 located within a housing 24. The retaining member 22 comprises a partially spherical element having a retaining passageway 26 defined therethrough. The retaining member 22 is initially a spherical element which then has a retaining passageway therethrough and is therefore referred to as a partially spherical element.

The retaining passageway 26 has a circular cross-section and extends through the centre of the partially spherical element. The inner surface of the retaining passageway 26 co-operates with the outer surface of a retaining shaft 28 provided on the second securement member. However, the inner surface does not grip or clamp the retaining shaft 28 and the retaining shaft 28 is slidably movable through the retaining passageway 26. This movement is referred to as free movement since only a small force is required to overcome any surface friction and can be moved by the simple action of gravity on the two securement members. The retaining passageway 26 is tubular having a cylindrical inner surface and passes through the centre of the partially spherical element.

The retaining shaft 28 extends through the retaining passageway and is arranged to co-operate with the retaining member 22 such that relative rotational movement between the retaining shaft 28 and the retaining member 22 is prevented or is at least inhibited to a significant extent. Such relative rotation may incur the transfer of substantial forces which may otherwise damage the harness securement apparatus. The retaining shaft 28 and the retaining member 22 are arranged to jointly pivot or rotate about the centre of the retaining member 22. This restrained movement prevents damage to any parts moving relative to each other. The relative pivotal movement of the retaining member 22 in the retaining housing 24 is not free and requires a greater force than for free movement to initiate the movement, for example the action of gravity on the two members would not be sufficient to rotate the retaining member. The only significant movement between the retaining shaft 28 and the retaining member 22 that is permitted relates to the retaining shaft 28 being slidably movable through the retaining passageway 26 defined in the retaining member 22 and the retaining shaft 28 is also rotatable relative to the retaining member 22 about the axis defined along the longitudinal axis of the retaining shaft which coincides with the longitudinal axis of the retaining passageway 26 (this movement being free movement).

The first securement member comprises a retaining plate 30 or projection that extends outwardly from the mounting plate 18. The retaining plate 30 has an aperture 32 defined therein, for example the retaining plate 30 may comprise a eyelet having a circular aperture 32 defined therethrough. The retaining plate 30 has a retaining housing 24 for locating and retaining the retaining member 22 therein. The retaining housing 22 comprises a shaped inner surface and preferably a partially spherical inner surface. The shaped inner surface is arranged to co-operate with the outer surface of the retaining member 22. The inner surface of the housing 24 comprises a low friction surface in order for the retaining member 22 to be movable relative thereto. The retaining member 22 is permanently housed within the retaining housing 24 and no translational movement of the retaining member 22 relative to the first securement member 12 is permitted but rotational movement is enabled. The retaining member 22 is rotatable in all axes relative to and about the housing 24.

Accordingly, once the second securement member 14 is retained to the first securement member 12, the second securement member 14 and the retaining shaft 28 can slide in the retaining passageway 26 and thereby enables the securement shaft 16 to slide forward and backwards along the longitudinal direction of the shaft 15. This enables the horse drawn carriage 11 to move slightly forwards and backwards relative to the harness and the horse. The amount of translational movement is restricted by the two abutment plates 34, 36 (as shown in Figures 3, 4, 8, 12 and 13) secured at each end of the retaining shaft. The amount of relative translational movement may be in the region of 10mm to 20mm. This relative translational movement is advantageous since in a "pacer" movement the left legs of the horse move together whilst subsequently the right legs of the horse will then move. Accordingly, the relative translational movement enabled by the present invention may help to provide a more even transfer of force from the horse to the carriage. The translational movement is also advantageous in trotting and other movements by smoothing out the force to be transferred to the carriage.

The retaining member 22 and hence the second securement member 24 is rotatable about an axis passing through the retaining passageway 28 which coincides with the longitudinal axis of the retaining shaft 28. This axis is defined through the longitudinal axis of the retaining shaft 28 ( and the retaining passageway 26) and enables the retaining shaft 28 to rotate relative to the retaining member 22. This enables the harness and hence the horse to move laterally within the shafts extending from the carriage and also is advantageous whilst the carriage is going around a corner. The amount of the rotational movement is restricted by the side edges 35 of the abutment plates 34 abutting the mounting plate 18 and/or the shafts 15 extending from the carriage 11. However, the second securement member 24 can preferably rotate through greater than 180° in this plane for example in the region of 180° to 270°. As the horse moves away from a shaft 15 the second securement member 24 may rotate inwardly to move towards the harness. Alternatively the horse may move towards the shaft 15 and the second securement member 14 will pivot or rotate outwardly. As the second securement member 14 moves outwardly (or inwardly) a second securement member 14 mounted on the opposite shaft would move inwardly (or outwardly). From the lowermost position, i.e. when the second securement member 14 is extending downwardly from the first securement member 12 any rotation outwardly or inwardly will also be accompanied by the securement shaft 16 moving or rotating upwardly.

The second securement member 14 is arranged to move or rotate about a second axis as the front end of the shaft 15 moves towards the horse (and therefore as the rear end of the shaft 15 moves away from the horse). The opposite will occur on the other shaft 15. The second securement member 14 pivots or rotates such that the front abutment plate 36 moves inwardly towards the horse and the rear abutment plate 34 moves away from the horse on one shaft 15 with the reverse occurring on the opposite shaft. Accordingly, the securement shaft 16 is arranged to rotate towards (or away from) the horse. This movement is advantageous since it moves the harness plane (or securement plane) towards the plane of the horse which thereby ensures that the pulling force from the horse is transferred evenly to the plane of the wheels which will be at an angle to the plane of the harness.

The second securement member 14 is arranged to move and rotate about a third axis as the front end of the shaft 15 moves upwards (and, therefore, as the rear end or carriage moves downwards) or vice versa. The second securement member 14 pivots or rotates such that the front abutment plate 34 moves downwards. Accordingly the securement shaft 16 is arranged to be angled upwards or downwards. This movement is advantageous when the carriage and/or horse is accelerating or decelerating. The rear abutment plate 36 is provided with an extended abutment portion 37 having an upper abutment edge 39 in order to limit the angle that the shaft 15 can extend upwardly and limits how close the carriage can be to the rear of the harness caused by the shaft 15 being angled upwardly. As the shaft 15 angles upwardly the vehicle or carriage moves towards the rear legs of the horse. The extended abutment portion 37 and upper abutment edge 39 abuts the shaft 15 and prevents the vehicle or carriage moving too close to the rear legs of the horse and thereby reduces the risk of an injury to the rear legs of the horse.

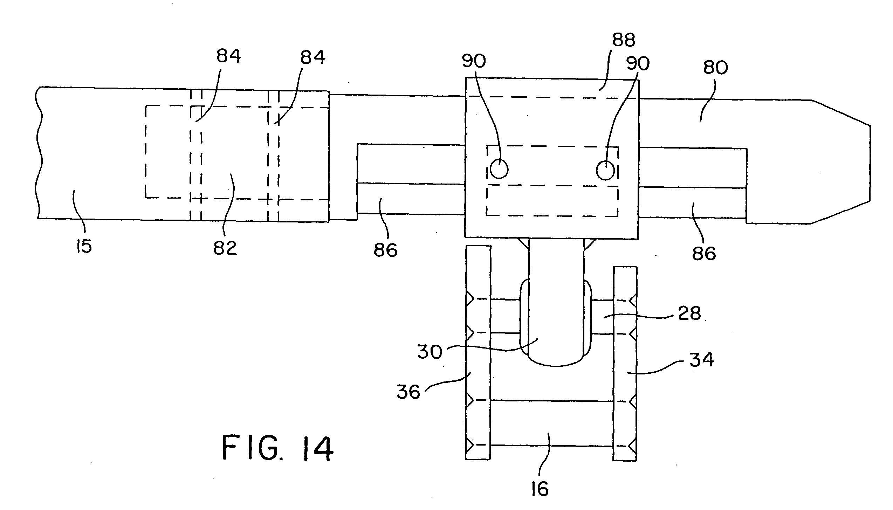

As shown in Figure 14, a further embodiment of the present invention may be arranged for use with a "bullet" 80. A bullet 80 is a mounting for a harness bracket that is arranged, in use, to be secured to the shafts 15 of the horse drawn vehicle. The bullet 80 comprises a generally cylindrical member having securement means to secure the bullet to the end of the shaft. The securement means comprises a cylindrical portion 82 of reduced diameter which is inserted into the end of the shaft 15. A passageway or two passageways 84 extends diametrically through the cylindrical portion 82 and a pin or bolt (not shown) or other securement member can be inserted through the shaft 15 and the passageways 84 to secure the bullet to the shaft 15.

A conventional bullet 80 may have two brackets 86 provided thereon. Only one bracket 86 may be required but a choice of two brackets enables the user to select the length of the shaft or distance from the vehicle to the harness 86 depending upon the situation, for example the size of the horse or vehicle.

A further embodiment of the present invention is provided with mounting means to mount the harness bracket 10 to a conventional bullet 80. The mounting means comprises a sleeve 88 which extends around the outer surface of the bullet 80. In another embodiment, the sleeve 88 may only partially extend around the bullet 80. The sleeve 88 is located over the bullet 80 and is secured thereto by securement means. The securement means comprises two (threaded) shafts 90 which extend through the sleeve 88 and through two passageways defined diametrically in the bullet 80. The end of each shaft may engage with a nut to secure the sleeve 88 to the bullet. The sleeve may be arranged to be secured to the bullet at any position or at a number of predetermined locations.

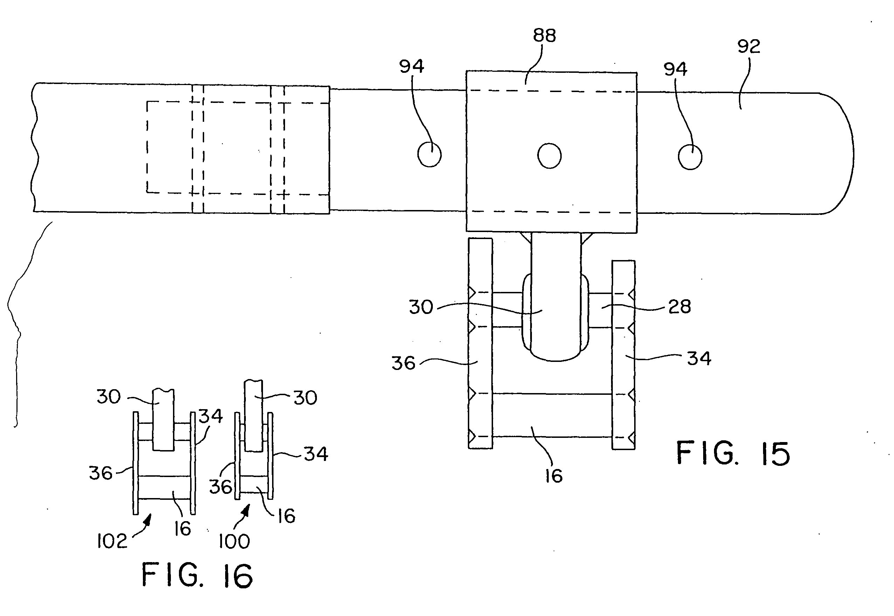

The bullet 92 may be a specially designed bullet 92 as shown in Figure 15. The bullet 92 is basically a conventional bullet without the brackets 86. The bullet 92 may be provided with a plurality of passageways 94 in order for the harness bracket 10 to be secured at different positions along the longitudinal length of the bullet 92. The position of the harness bracket 10 can therefore be altered depending upon the circumstances, for example the size of the horse and/or cart.

Any other suitable securement means may be used, for example shafts with corresponding "R" shaped clips could be used to simply and easily secure the sleeve to the bullet.

In a yet further embodiment of the present invention as shown in Figure 16, one of the harness brackets 100 in a pair is arranged to prevent or inhibit the retaining shaft 28 from sliding through the retaining passageway. Preferably it is the "near side" harness bracket 100 that prevents this sliding movement. The near side is defined to be on the inside of a corner of a track. Racing tracks generally only have corners of a single directions and, therefore, carts or brackets do not need to effectively cope with both corners equally. In this arrangement, the extended abutment portion 37 and upper abutment end 39 are not required on either bracket 100, 102 since the carriage or more particularly the shafts 15 will not tend to rise upwardly relative to the horse.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Harness securement apparatus for securing a vehicle to a harness, the harness securement apparatus being arranged, in use, to be secured to a vehicle, the harness securement apparatus comprising a first securement member which is arranged, in use, to be mounted to a part of a vehicle and a second securement member comprising securement means which enables a harness to be secured thereto, wherein the second securement member is movable relative to the first securement member.

2. Harness securement apparatus according to claim 1, in which a quick hitch clip is arranged, in use, to be secured to the second securement member.

3. Harness securement apparatus according to any preceding claim in which the first securement member is not removable from the second securement member.

4. Harness securement apparatus according to any preceding claim in which the second securement member is restrained for movement relative to the first securement member.

5. Harness securement apparatus according to any preceding claim in which the harness securement apparatus limits the relative movement between the first securement member and the second securement member.

6. Harness securement apparatus according to any preceding claim in which the vehicle comprises a horse drawn vehicle for use in harness racing or trotting racing.

7. Harness securement apparatus according to any preceding claim in which the harness securement apparatus comprises a harness bracket.

8. Harness securement apparatus according to any preceding claim in which the second securement member is secured to the first securement member to enable relative translational movement in a single plane.

9. Harness securement apparatus according to any preceding claim in which the second securement member is pivotally secured to the first securement member.

10. Harness securement apparatus according to any preceding claim in which the second securement member is pivotally secured to the first securement member such that a force is required to move the second securement member relative to the first securement member.

11. Harness securement apparatus according to any preceding claim in which the second securement member is pivotally movable relative to the first securement member about three axes.

12. Harness securement apparatus according to any preceding claim in which the second securement member is secured to the first securement member through a ball joint.

13. Harness securement apparatus according to any preceding claim in which the harness securement apparatus comprises a retaining element having a retaining passageway defined therethrough.

14. Harness securement apparatus according to any preceding claim in which the second securement member rotates about a first axis relative to the first securement member in order to reduce the angle between a harness and a securement surface of the harness securement apparatus whilst a vehicle is moving around a corner.

15. Harness securement apparatus according to any preceding claim in which the second securement member is adapted for translational movement relative to the first securement member whilst a vehicle is moving around a corner.

16. Harness securement apparatus according to any preceding claim in which the second securement member rotates about a first and a second axis relative to the first securement member in order to reduce the angle between a harness and a securement surface of the harness securement apparatus whilst a vehicle is moving around a corner.

17. Harness securement apparatus according to any preceding claim in which the second securement member is arranged to rotate about a third axis relative to the first securement member as a horse rises or falls relative to a vehicle.

18. Harness securement apparatus according to any preceding claim in which the second securement member is arranged to move relative to the first securement member as a vehicle accelerates and/or decelerates.

19. Harness securement apparatus according to any preceding claim in which the harness securement apparatus enables a harness plane to pivot relative to a wheel plane.

20. A vehicle comprising harness securement apparatus for securing a vehicle to a harness, the harness securement apparatus comprising a first securement member which is mounted to a part of the vehicle and a second securement member comprising securement means which enables a harness to be secured thereto, wherein the second securement member is movable relative to the first securement member.

21. A method of securing a vehicle to a harness comprising providing harness securement apparatus on a part of the vehicle, and securing a harness to the harness securement apparatus, the harness securement apparatus comprising a first securement member and a second securement member wherein the second securement member is movable relative to the first securement member.

22. A wheeled vehicle comprising harness securement apparatus, the harness securement apparatus being arranged to secure a harness in a harness plane whilst wheels of the vehicle are arranged to be retained in a wheel plane wherein the harness plane is movable relative to the wheel plane.
